# EUROPEAN PATENT APPLICATION

(11) **EP 4 640 342 A1**
(43) Date of publication of application: **29.10.2025**
(21) Application number: 25162017.5
(22) Date of filing: 06.03.2025
(51) Int. Cl.: B22F 3/10, B22F 10/80, B33Y 50/00, G06F 30/23, G06F 113/10, G06F 119/18

(54) **INFORMATION PROCESSING METHOD, INFORMATION PROCESSING APPARATUS, AND CARRIER MEANS FOR PREDICTING SINTERING SHAPE BASED ON VISCOSITY MODEL**

(30) Priority: 13.03.2024 JP 2024039270; 04.12.2024 JP 2024211129
(71) Applicant: Ricoh Company, Ltd., Tokyo 143-8555 (JP)
(72) Inventor: MATSUMURA, Takashi, Tokyo, 143-8555 (JP); YAMAGUCHI, Daichi, Tokyo, 143-8555 (JP); OYA, Naoki, Tokyo, 143-8555 (JP)
(74) Representative: SSM Sandmair

(57) **Abstract**

An information processing method is performed by an information processing apparatus and includes receiving (S301) a shape of a fabrication object after sintering, predicting (S303) a shape of the fabrication object before the sintering based on the shape of the fabrication object after the sintering and a prediction condition stored in a storage unit, and outputting (S304) information relating to the predicted shape of the fabrication object before the sintering. The prediction condition includes information based on a temperature threshold value that is a temperature at which a viscosity of the fabrication object decreases from a first viscosity to a second viscosity due to the sintering, the first viscosity, and the second viscosity.

## Description

### BACKGROUND

### Technical Field

Embodiments of the present disclosure relate to an information processing method, an information processing apparatus, and carrier means.

### Related Art

There is a technique for predicting the shape of a green compact. For example, Japanese Unexamined Patent Application Publication No. 2022-021956 discloses a technique for creating a model through machine learning in which learning data sets are learned and causing the model to predict the shape of a three-dimensional green compact during fabrication. However, it is difficult for the background technique to predict the shape of the green compact with high accuracy.

### SUMMARY

According to an embodiment of the present disclosure, an information processing method is performed by an information processing apparatus and includes receiving a shape of a fabrication object after sintering, predicting a shape of the fabrication object before the sintering based on the shape of the fabrication object after the sintering and a prediction condition stored in a storage unit, and outputting information relating to the predicted shape of the fabrication object before the sintering. The prediction condition includes information based on a temperature threshold value that is a temperature at which a viscosity of the fabrication object decreases from a first viscosity to a second viscosity due to the sintering, the first viscosity, and the second viscosity.

According to an embodiment of the present disclosure, an information processing method is performed by an information processing apparatus and includes receiving a shape of a fabrication object before sintering, predicting a shape of the fabrication object after the sintering based on the shape of the fabrication object before the sintering and a prediction condition stored in a storage unit, and outputting information relating to the predicted shape of the fabrication object after the sintering. The prediction condition includes information based on a temperature threshold value that is a temperature at which a viscosity of the fabrication object decreases from a first viscosity to a second viscosity due to the sintering, the first viscosity, and the second viscosity.

According to an embodiment of the present disclosure, carrier means carries computer readable code for controlling a computer system to carry out any of the above-described methods.

According to an embodiment of the present disclosure, an information processing apparatus includes a reception unit, a prediction unit, and an output unit. The reception unit receives a shape of a fabrication object after sintering. The prediction unit predicts a shape of the fabrication object before the sintering based on the shape of the fabrication object after the sintering and a prediction condition stored in a storage unit. The output unit outputs information relating to the predicted shape of the fabrication object before the sintering. The prediction condition includes information based on a temperature threshold value that is a temperature at which a viscosity of the fabrication object decreases from a first viscosity to a second viscosity due to the sintering, the first viscosity, and the second viscosity.

According to the above-described embodiments of the present disclosure, the shape of a green compact is predicted with high accuracy.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of a system configuration of a fabrication apparatus utilization system;
FIG. 2 is a diagram illustrating an example of a system configuration of a fabrication system illustrated in FIG. 1;
FIG. 3 is a diagram illustrating an example of a configuration of a fabrication apparatus illustrated in FIG. 2;
FIG. 4 is a flowchart illustrating an example of a fabrication method;
FIG. 5 is a diagram illustrating an example of hardware configurations of an information processing apparatus and a cloud server illustrated in FIG. 1;
FIG. 6 is a block diagram illustrating example functions of the information processing apparatus illustrated in FIG. 1;
FIG. 7 is a graph illustrating an example of a temperature/viscosity curve;
FIG. 8 is a graph illustrating another example of the temperature/viscosity curve;
FIG. 9 is a flowchart illustrating an example of processing performed by the information processing apparatus;
FIG. 10 is a view illustrating an example of the model fabrication object of a green compact;
FIG. 11 is a table illustrating an example of correspondence data (a first viscosity, a second viscosity, a temperature threshold value, and a shape error at each evaluation point) recorded by a shape error evaluation unit;
FIG. 12 is a block diagram illustrating example functions of a regression model creation unit using machine learning;
FIGS. 13A to 13D are cross-sectional views of example results of sintering simulation;
FIG. 14 is a flowchart illustrating an example of a flow of simulation using optimal parameters (a temperature threshold value, a first viscosity, and a second viscosity) determined in the processing illustrated in FIG. 9;
FIG. 15 is a flowchart illustrating an example of a flow of simulation in which inverse analysis is performed using the optimal parameters (the temperature threshold value, the first viscosity, and the second viscosity) determined in the processing illustrated in FIG. 9;
FIG. 16 illustrates examples of viscous constitutive equations used in governing equations;
FIG. 17 illustrates examples of equations expressing a sintering stress; and
FIG. 18 illustrates an example of an equation expressing a grain diameter.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

As an example, an information processing apparatus and an information processing method performed by the information processing apparatus are described below with reference to the drawings.

### Finite Element Method

A finite element method (FEM) is a method of dividing an analysis target into analysis elements including minute elements, solving an equation for each analysis element, and combining the solutions to solve the overall equation. In the FEM, a governing equation is used as an equation. The governing equation incorporates a viscous constitutive equation therein. The viscous constitutive equation represents a relationship between the stress and strain rate of a material. The information processing apparatus according to one or more embodiments of the present disclosure predicts the shape of a green compact or a final compact based on the FEM.

The shape of a green compact is expressed by, for example, the dimension and angle of a predetermined part. The shape of a green compact may be expressed by the difference in the dimension and angle from the model fabrication object.

### Binder Jetting

Binder jetting is a fabrication technique for combining powder and a binder as fabrication liquid. In metal binder jetting (MBJ), metal powder is used as the powder.

In the MBJ, a fabrication apparatus forms a green compact (green body) using metal powder and fabrication liquid. After that, a sintering apparatus sinters the green compact to form a final compact. In other words, the final compact refers to a sintered green compact. In the MBJ, since a green compact deforms due to sintering, the sintered green compact is often subjected to post-processing such as cutting or polishing. In many cases, a designer grasps the tendency of the deformation for each material or shape of a final compact and repeats the fabrication of a prototype many times. Thus, the designer considers a corrected shape taking into account the deformation and examines the arrangement inside a sintering apparatus and the use of a setter, which is a jig that prevents deformation during sintering. These considerations and examinations increase costs and rely on the experience of dedicated engineers having know-how.

In the MBJ, therefore, the simulation of the sintering inside the sintering apparatus using the FEM (hereinafter referred to as sintering simulation) is increasingly important.
The sintering simulation predicts the shape deformation that occurs during sintering based on the shape of a green compact before sintering and the model fabrication object. Moreover, the sintering simulation helps determine a corrected shape for minimizing the deformation. The FEM minimizes the trial and error, leading to cost reduction.

A green compact including metal powder is sintered using a method called "solid-phase sintering" or a method called "liquid-phase sintering." In the solid-phase sintering, when a green compact includes metal powder with a high melting point, sintering progresses while a material remains solid. The solid-phase sintering causes little deformation. Moreover, a theoretical model that expresses a phenomenon in mathematical terms has been established. This enables the sintering simulation to be performed based on the FEM using a viscous constitutive equation.

The liquid-phase sintering is applied to metal powder with a low melting point such as pure aluminum or an aluminum alloy. In the liquid-phase sintering, when a green compact includes a mixture of metal powder and a material with a lower melting point than the sintering temperature of the metal powder, part of the material forms a liquid phase during sintering. The liquid-phase sintering causes significant deformation. Nevertheless, the detailed mechanism of the liquid-phase sintering is not known. Furthermore, since a physical model used for the liquid-phase sintering has not been established yet, it has been difficult to predict the shape of a final compact with high accuracy.

In the case of the solid-phase sintering, the viscosity of a viscous constitutive equation is theoretically derived from the Arrhenius equation. However, applying the viscosity derived from the Arrhenius equation to the liquid-phase sintering as it decreases the accuracy of the shape prediction. Therefore, in one or more embodiments of the present disclosure, the viscosity to be introduced into a governing equation is derived based on a temperature/viscosity curve where, when the temperature reaches a predetermined temperature threshold value A, the viscosity decreases from a first viscosity to a second viscosity.

Parameters may be optimized using, for example, a sensitivity analysis method or the design of experiments. The sensitivity analysis method involves setting a central value for each parameter based on a certain reference, setting multiple levels above and below the central value, evaluating the sensitivity for each level, and selecting the best level for each parameter. The design of experiments refers to a systematic method used when conducting an experiment for clarifying a cause-and-effect relationship between the input and the output. In one or more embodiments of the present disclosure, it is preferable to use the design of experiments. The design of experiments optimizes parameters efficiently even when the number of parameters is large.

In one or more embodiments of the present disclosure, machine learning may also be used. By combining a temperature/viscosity curve, the design of experiments, and machine learning, the shape of a final compact is predicted with high accuracy.

### Terms

A "fabrication object" refers to an object for which prediction is performed. For example, a "fabrication object" refers to an object that is fabricated using the MBJ. The shape of the fabrication object after sintering (e.g., a final compact) is predicted from the shape of the fabrication object before sintering (e.g., a green compact). Alternatively, the shape of the fabrication object before sintering (e.g., a green compact) is predicted from the shape of the fabrication object after sintering (e.g., a final compact).

### Example of System Configuration

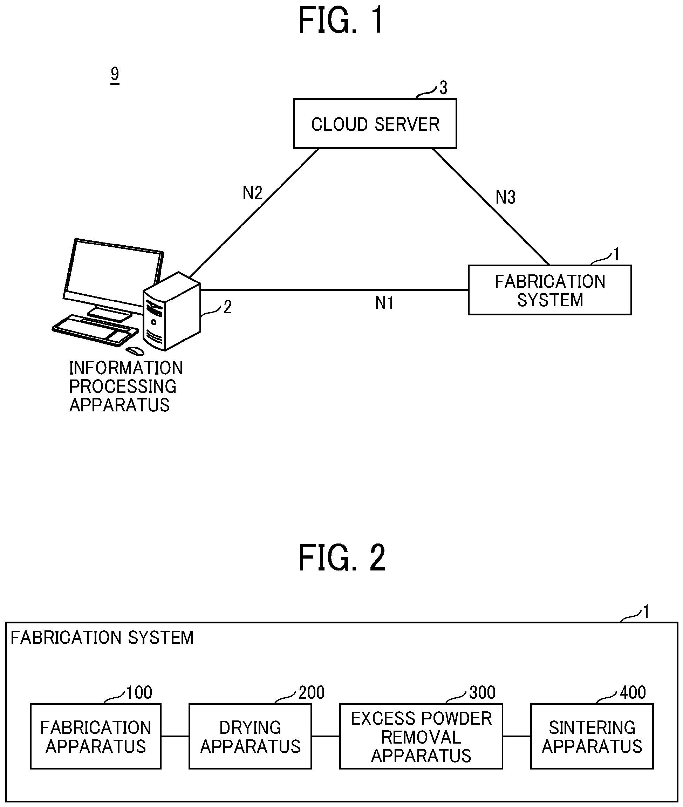

FIG. 1 is a diagram illustrating an example of a system configuration of a fabrication apparatus utilization system 9. The fabrication apparatus utilization system 9 includes a fabrication system 1, an information processing apparatus 2, and a cloud server 3. The information processing apparatus 2 is not necessarily connected to the fabrication system 1 at all times and may be omitted. The cloud server 3 may also be omitted.

The information processing apparatus 2 and the fabrication system 1 are communicably connected to each other via a network N1. The network N1 includes, for example, a wired or wireless local area network (LAN) or a wide area network (WAN) provided in a building where the information processing apparatus 2 and the fabrication system 1 are disposed. The network N1 may also be a dedicated line such as a universal serial bus (USB) or RS-485 cable, or an ad hoc network such as Bluetooth^{™}.

The information processing apparatus 2 and the fabrication system 1 are communicable with the cloud server 3 via networks N2 and N3, respectively. The networks N2 and N3 include a LAN provided in the building, and may include the Internet. The networks N2 and N3 may also include mobile networks such as 4th generation (4G), long-term evolution (LTE), and 5th generation (5G) networks. The networks N1 to N3 may also include virtual local area networks (VLANs).

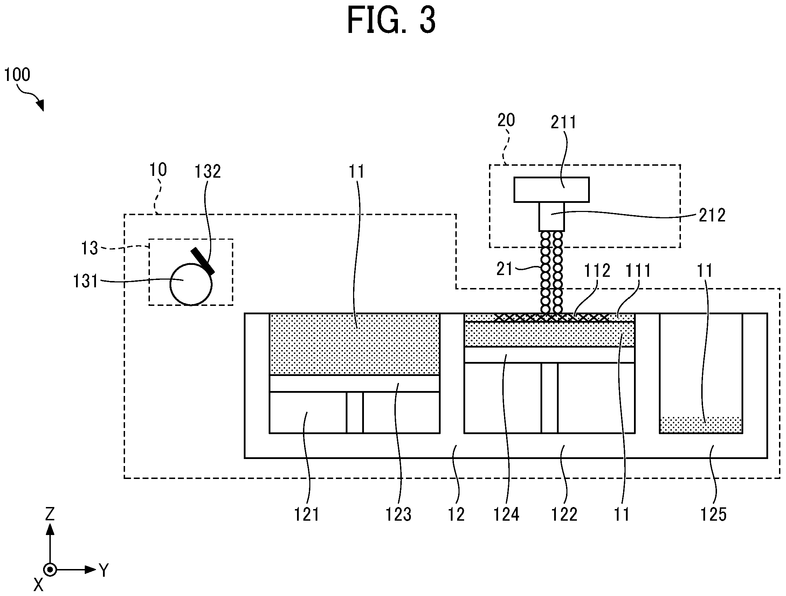

The fabrication system 1 includes one or more apparatuses for fabricating a green compact, as described with reference to FIG. 2. The fabrication system 1 may employ, for example, a binder jetting method or a high-speed sintering method. The fabrication system 1 will be described in detail later with reference to FIG. 3.

The information processing apparatus 2 is a general-purpose computer such as a personal computer (PC). The information processing apparatus 2 is assumed to be operated by a designer, but may be operated by any user regardless of the role of the user. The information processing apparatus 2 displays a green compact using fabrication data such as stereolithography (STL) data or displays a predicted shape of a final compact. The information processing apparatus 2 transmits the fabrication data to the fabrication system 1 in response to the operation by the designer and instructs the start of the fabrication. During the fabrication, the information processing apparatus 2 displays the status of the fabrication system 1 in real time. The information processing apparatus 2 that communicates with the fabrication system 1 during the fabrication and the information processing apparatus 2 that performs sintering simulation may be provided separately.

The cloud server 3 stores, for example, fabrication data, or causes the information processing apparatus 2 to run a web application to assist the designer in creating a green compact model. The cloud server 3 may also be an apparatus that performs sintering simulation and machine learning, as described in one or more embodiments of the present disclosure. The cloud server 3 may also be a server that is present on-premises.

### Fabrication System

Referring now to FIG. 2, the fabrication system 1 illustrated FIG. 1 is described as a fabrication system using the binder jetting method. FIG. 2 is a diagram illustrating an example of a system configuration of the fabrication system 1. The fabrication system 1 includes a fabrication apparatus 100, a drying apparatus 200, an excess powder removal apparatus 300, and a sintering apparatus 400. The fabrication apparatus 100 fabricates a green compact. The drying apparatus 200 dries the green compact fabricated by the fabrication apparatus 100. The excess powder removal apparatus 300 removes excess powder adhering to the green compact dried by the drying apparatus 200. The sintering apparatus 400 sinters the green compact from which excess powder has been removed. The sintering apparatus 400 may degrease the green compact before sintering the green compact.

The fabrication system 1 may include the fabrication apparatus 100, the drying apparatus 200, the excess powder removal apparatus 300, and the sintering apparatus 400 as four separate apparatuses including different housings. Alternatively, the fabrication system 1 may include these four apparatuses as a single integrated apparatus. Alternatively, the fabrication apparatus 100 or the sintering apparatus 400 may include the overall functions of the fabrication system 1. In the fabrication system 1, at least part of the functions of the drying apparatus 200 or the excess powder removal apparatus 300 may be omitted as appropriate.

The fabrication apparatus 100 included in the fabrication system 1 is described with reference to FIG. 3. FIG. 3 is a diagram illustrating an example of a configuration of the fabrication apparatus 100. The fabrication apparatus 100 includes a fabrication device 10 and an application device 20. The fabrication device 10 fabricates a powder layer 111, which includes powder 11. The application device 20 applies fabrication liquid 21 to the powder layer 111 to form a fabrication layer 112. Specifically, the fabrication apparatus 100 fabricates a green compact in which a plurality of fabrication layers 112 is laminated. Hereinafter, the plurality of fabrication layers 112 may be collectively referred to as the "fabrication layer 112."

The fabrication device 10 includes a powder tank 12 and a layering device 13. The powder tank 12 includes a supply tank 121, a fabrication tank 122, a supply stage 123, a fabrication stage 124, and an excess powder tank 125.

The powder tank 12 has a box shape. The supply tank 121, the fabrication tank 122, and the excess powder tank 125 have open top faces. The layering device 13 includes a flattening device 131 and a powder remover 132.

The supply tank 121 is a tank that supplies the powder 11 to the fabrication tank 122. The supply tank 121 stores the powder 11 to be supplied to the fabrication tank 122. The supply stage 123 is disposed at a bottom of the supply tank 121. The supply stage 123 moves up and down in a vertical direction (Z direction). The supply stage 123 is disposed such that a side surface of the supply stage 123 is in contact with an inner side surface of the supply tank 121.

The fabrication tank 122 receives the powder 11 to be used for fabrication from the supply tank 121. In the fabrication tank 122, the powder layer 111 and the fabrication layer 112 are formed. Further, in the fabrication tank 122, a plurality of fabrication layers 112 is laminated to fabricate a green compact.

The supply tank 121 and the fabrication tank 122 respectively include the supply stage 123 and the fabrication stage 124 at their bottoms, each of which moves up and down in the vertical direction (Z direction). The fabrication stage 124 is disposed such that a side surface of the fabrication stage 124 is in contact with an inner side surface of the fabrication tank 122. Top faces of the supply stage 123 and the fabrication stage 124 are kept horizontal.

The excess powder tank 125 is a tank that stores excess powder 11 among the powder 11 that has been flattened by the flattening device 131 during the formation of the powder layer 111. The excess powder tank 125 may include, at its bottom, means for suctioning the powder 11 or means for removing the excess powder tank 125. The excess powder tank 125 is disposed next to the fabrication tank 122. The excess powder 11 stored in the excess powder tank 125 may be returned to the supply tank 121 or returned to the supply tank 121 via a powder supply device. The powder supply device may be disposed at the top of, or above the supply tank 121. The powder supply device may supply the excess powder 11 to the supply tank 121 before fabrication starts or when the amount of powder 11 in the supply tank 121 decreases. In the present embodiment, the powder tank 12 includes three tanks, namely, the supply tank 121, the fabrication tank 122, and the excess powder tank 125 or two tanks, namely, the supply tank 121 and the fabrication tank 122. In another embodiment, the powder tank 12 may include the fabrication tank 122 and omit the other two tanks. In this case, the powder supply device may supply the powder to the fabrication tank 122. Alternatively, the powder tank 12 may include the fabrication tank 122 and the excess powder tank 125 and omit the supply tank 121. In this case as well, the powder supply device may supply the powder to the fabrication tank 122.

The powder supply device may employ a screw conveyor system using a screw or an air conveyance system using air to convey the powder 11 to the supply tank 121.

The flattening device 131 flattens the fabrication layer 112 or the powder layer 111. The flattening device 131 rotates a recoater as a rotating body to flatten the fabrication layer 112. The flattening device 131 drivingly rotates to supply the powder 11 from the supply stage 123 of the supply tank 121 to the fabrication tank 122 so that the powder layer 111 is formed. The flattening device 131 reciprocates in a Y direction along a stage surface of the fabrication stage 124. The stage surface is a surface on which the powder 11 is stacked. Specifically, the flattening device 131 moves horizontally from the outside of the supply tank 121 and then passes over the top of the supply tank 121 and the fabrication tank 122 so that the powder 11 in the supply tank 121 is moved and supplied to the fabrication tank 122. Further, the flattening device 131 flattens the powder 11 while passing over the top of the fabrication tank 122. This forms the powder layer 111 in the fabrication tank 122. The flattening device 131 is a component that is longer than an internal dimension of the fabrication tank 122 and the supply tank 121. The flattening device 131 may be a plate-like device and include a blade or a bar.

The powder remover 132 removes powder that has adhered to the flattening device 131. The powder remover 132 keeps in contact with a circumference of the flattening device 131 while moving together with the flattening device 131.

The application device 20 includes a carriage 211 and a head 212. The head 212 applies the fabrication liquid 21 to the powder layer 111. The head 212 is, for example, an inkjet head, and includes a nozzle array in which a plurality of nozzles is arranged in a row. The application device 20 may apply cyan fabrication liquid, magenta fabrication liquid, yellow fabrication liquid, and black fabrication liquid to the powder layer 111 to form a colored green compact. Alternatively, the application device 20 may apply fabrication liquid of a single color to the powder layer 111 from each of the plurality of nozzles. The head 212 may apply the fabrication liquid 21 by an inkjet method or a dispenser method.

At least one head 212 is mounted on the carriage 211 and driven by a motor to reciprocate in an X direction (main scanning direction), the Y direction (sub-scanning direction), and the Z direction with the support of, for example, a guide member.

### Flow of Fabrication Using Fabrication System

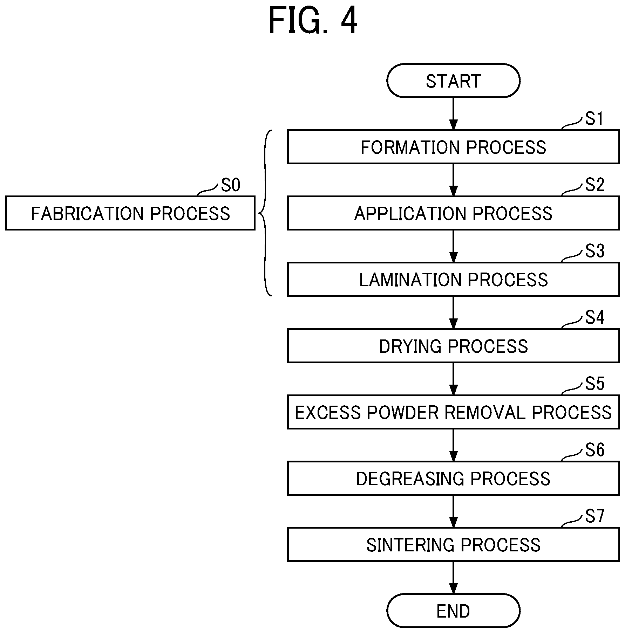

FIG. 4 is a flowchart illustrating an example of a fabrication method. The fabrication method is performed by the fabrication system 1. A fabrication process S0 includes a formation process S1, an application process S2, and a lamination process S3. In the formation process S1, the fabrication apparatus 100 forms a powder layer including powder. In the application process S2, the fabrication apparatus 100 applies fabrication liquid to the powder layer. In the lamination process S3, the fabrication apparatus 100 repeats the formation process S1 and the application process S2. In this way, the fabrication apparatus 100 fabricates a green compact.

After the fabrication process S0, the drying apparatus 200 performs a drying process S4 to dry the green compact. Specifically, in the drying process S4, the drying apparatus 200 heats the green compact to vaporize a liquid component such as solvent remaining in the green compact and remove the liquid component from the green compact. After that, the excess powder removal apparatus 300 performs an excess powder removal process S5 to remove excess powder adhering to the green compact.

After the excess powder removal process S5, the sintering apparatus 400 performs a degreasing process S6. In the degreasing process S6, the sintering apparatus 400 sinters the green compact in an atmosphere including an inert gas, thereby removing a resin from the green compact and forming a degreased body. After that, the sintering apparatus 400 performs a sintering process S7, thereby obtaining the green compact with the degreased body sintered.

When the sintering apparatus 400 performs the degreasing process S6 and the sintering process S7, a green compact model may be placed on a setter. Placing the green compact model on the setter minimizes stresses applied to the green compact model due to gravity during the degreasing process S6 and the sintering process S7, thereby minimizing cracks and collapse. The setter may, for example, include ceramic or may employ a green compact setter created together with the green compact model. The green compact setter deforms and shrinks in accordance with the green compact model during the degreasing process S6 and the sintering process S7. Therefore, using the green compact setter reduces stresses applied in the vertical and horizontal directions, thereby minimizing cracks and collapse.

### Example of Hardware Configurations

Example of Hardware Configurations of Information Processing Apparatus and Cloud Server

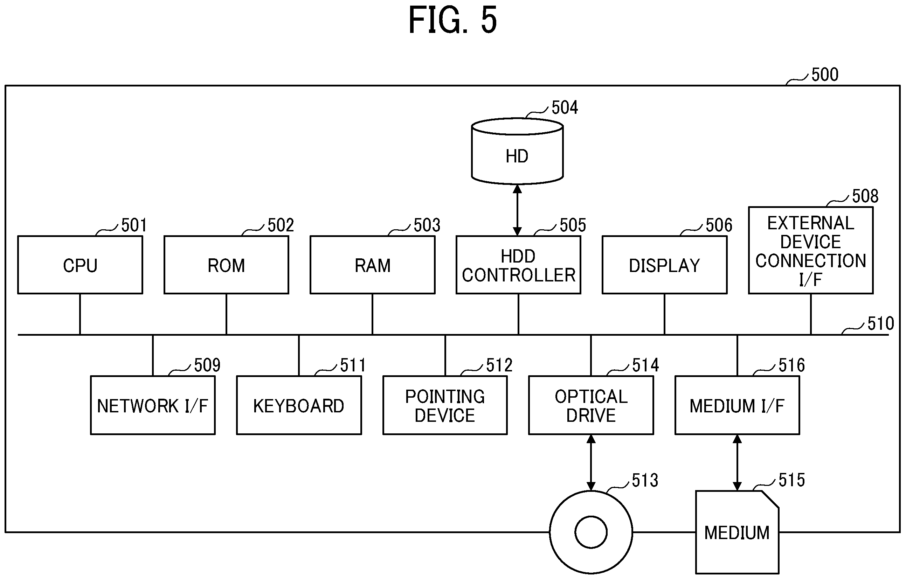

FIG. 5 is a diagram illustrating an example of hardware configurations of the information processing apparatus 2 and the cloud server 3. As illustrated in FIG. 5, each of the information processing apparatus 2 and the cloud server 3 includes a computer 500. The computer 500 includes a central processing unit (CPU) 501, a read-only memory (ROM) 502, a random-access memory (RAM) 503, a hard disk (HD) 504, a hard disk drive (HDD) controller 505, a display 506, an external device connection interface (IF) 508, a network I/F 509, a bus line 510, a keyboard 511, a pointing device 512, an optical drive 514, and a medium I/F 516.

The CPU 501 controls the operation of the computer 500. The ROM 502 stores programs such as an initial program loader (IPL) for executing the CPU 501. The RAM 503 is used as a work area for the CPU 501. The HD 504 stores various data such as programs. The HDD controller 505 controls the reading and writing of various data from and to the HD 504 under the control of the CPU 501. The display 506 displays various pieces of information such as a cursor, menus, windows, characters, and images. The external device connection I/F 508 is an interface for connecting various external devices. The external devices include, for example, a USB memory and a printer. The network I/F 509 is an interface for data communication via the networks N2 and N3. The bus line 510 includes an address bus and data bus that electrically connect components such as the CPU 501 illustrated in FIG. 5 to each other.

The keyboard 511 is an example of an input device including a plurality of keys for inputting, for example, characters, numerical values, and various instructions. The pointing device 512 is an example of an input device that allows the user to select or execute various instructions, select a target to be processed, and move a cursor being displayed. The optical drive 514 controls reading and writing of various data from and to an optical medium 513, which is an example of a detachable recording medium. Examples of the optical medium 513 include a compact disc (CD), a digital versatile disk (DVD), and Blue-Ray^{™}. The medium I/F 516 controls reading and writing (storing) of data from and to a recording medium 515 such as a flash memory.

### Functions

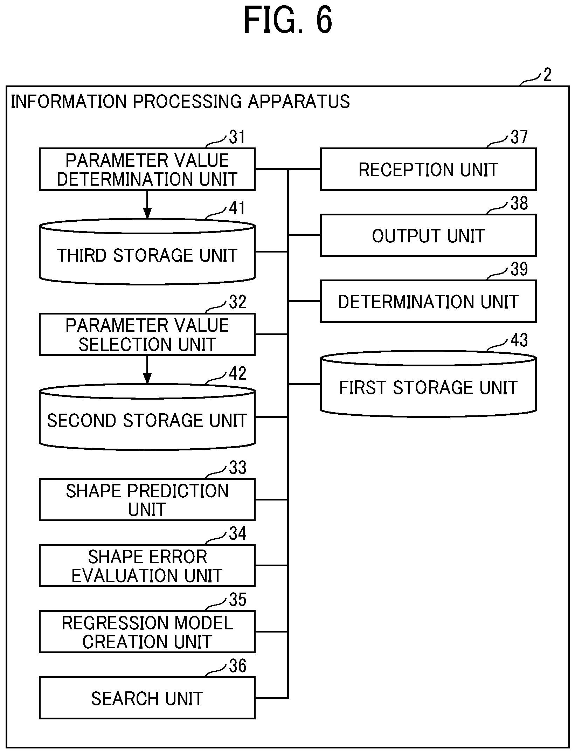

FIG. 6 is a block diagram illustrating example functions of the information processing apparatus 2. The information processing apparatus 2 includes a parameter value determination unit 31, a parameter value selection unit 32, a shape prediction unit 33, a shape error evaluation unit 34, a regression model creation unit 35, a search unit 36, a reception unit 37, an output unit 38, and a determination unit 39. The functions of the information processing apparatus 2 are functions or means that are implemented by the CPU 501 of the information processing apparatus 2 executing a program stored in, for example, the HD 504 and controlling the hardware illustrated in FIG. 5.

The parameter value determination unit 31 combines values of a plurality of parameter items to create an explanatory variable database P. The explanatory variable database P is stored in a third storage unit 41. Examples of the parameter items include a factor that affects deformation. Hereinafter, a value of a parameter item is referred to as a parameter value. A parameter value may be set by a designer within a set range or set as a fixed value as an explanatory variable X. The parameter value determination unit 31 determines parameter values using random numbers from the range of values set by the designer. The parameter value determination unit 31 combines a plurality of parameter values to create the explanatory variable database P.

The parameter value selection unit 32 selects a plurality of combinations of parameter values. The parameter value selection unit 32 selects a plurality of combinations of parameter values from the explanatory variable database P without duplication or bias, for example, based on the design of experiments. Hereinafter, a plurality of combinations of parameter values selected by the parameter value selection unit 32 is referred to as learning explanatory variable sets Q. In one example, the number of combinations of parameter values selected by the parameter value selection unit 32 is 30. These learning explanatory variable sets Q are stored in a second storage unit 42. In addition, actually measured shape errors are stored in the second storage unit 42 in association with the corresponding learning explanatory variable sets Q. Hereinafter, the data in which a learning explanatory variable set Q is associated with corresponding one or more shape errors is referred to as "correspondence data." The second storage unit 42 and the third storage unit 41 may be a single storage unit. The shape prediction unit 33 predicts the shape of a sintered green compact, that is, the shape of a final compact, using a combination of parameter values selected by the parameter value selection unit 32. More specifically, the shape prediction unit 33 predicts the shape of the final compact based on the FEM using a temperature/viscosity curve obtained by combining the temperature threshold value A, the first viscosity, and the second viscosity as parameter values.

The shape error evaluation unit 34 calculates a shape error between the shape of the final compact predicted by the shape prediction unit 33 and the shape of the actual final compact. The shape error is a difference between the shape of the final compact that is predicted and the shape of the actual compact, which may be referred to as residual. The shape of the actual final compact is obtained by obtaining the shape dimensions using, for example, a three-dimensional (3D) scanner. The term "evaluation" may be replaced with "calculation."

The regression model creation unit 35 performs machine learning using a plurality of learning data sets, each of which is a combination of parameter values and one or more shape errors, to create a regression model. The regression model receives the input of a combination of parameter values and outputs one or more shape errors in response.

The search unit 36 searches for, using the regression model created by the regression model creation unit 35, several combinations of parameter values with which the output shape errors are close to or closest to 0. The learning explanatory variable sets Q in the explanatory variable database P that have been used for learning may be excluded from the search target. The search unit 36 searches the explanatory variable database P for a plurality of combinations of parameter values with which the shape errors are close to or closest to 0 among the parameter values excluding the learning explanatory variable sets Q in the explanatory variable database P. The shape prediction unit 33 determines a new combination of parameter values based on the regression model and predicts the shape of the final compact.

The reception unit 37 receives various operations performed by the designer on the information processing apparatus 2. For example, the reception unit 37 receives the temperature threshold value A, the first viscosity, and the second viscosity as the parameter items in order to express a temperature/viscosity curve. The reception unit 37 also receives the input of the shape of an object to be subjected to the sintering simulation and evaluation points of the shape of the object. Examples of the object to be subjected to the sintering simulation include a green compact and a final compact. An evaluation point is a position at which a shape error of the green compact or the final compact is calculated. The number of evaluation points may be one or more. For example, the reception unit 37 may also receive the model fabrication object and the actually sintered model fabrication object.

The output unit 38 displays shape errors between the predicted shape of the final compact and the shape of the actual final compact on the display 506. In the present embodiment, the output unit 38 displays the shape errors on the display 506 as an example. Alternatively, the output unit 38 may transmit information regarding the predicted shape of the final compact to the fabrication apparatus 100 or the sintering apparatus 400.

The determination unit 39 determines whether the shape errors obtained by the shape error evaluation unit 34 have achieved the target. When the shape errors have achieved the target, the determination unit 39 stores the temperature threshold value A, the first viscosity, and the second viscosity as prediction conditions in a first storage unit 43. When the shape errors have not achieved the target, the determination unit 39 may store, in the second storage unit 42, correspondence data in which the temperature threshold value A, the first viscosity, and the second viscosity are associated with the shape errors.

When the cloud server 3 performs the sintering simulation, the cloud server 3 may include the parameter value determination unit 31, the parameter value selection unit 32, the shape prediction unit 33, the shape error evaluation unit 34, the regression model creation unit 35, and the search unit 36.

### Sintering Simulation

The sintering simulation performed by the information processing apparatus 2 is described below. In the FEM for solid-phase sintering, a viscous constitutive equation is incorporated into a governing equation.

The viscous constitutive equation represents a relationship between the stress and the strain rate of a material and is particularly effective for a material that exhibits both elastic behavior and viscous behavior during sintering. In one or more embodiments of the present disclosure, the term "viscous" includes the meaning of viscoelasticity or viscoplasticity.

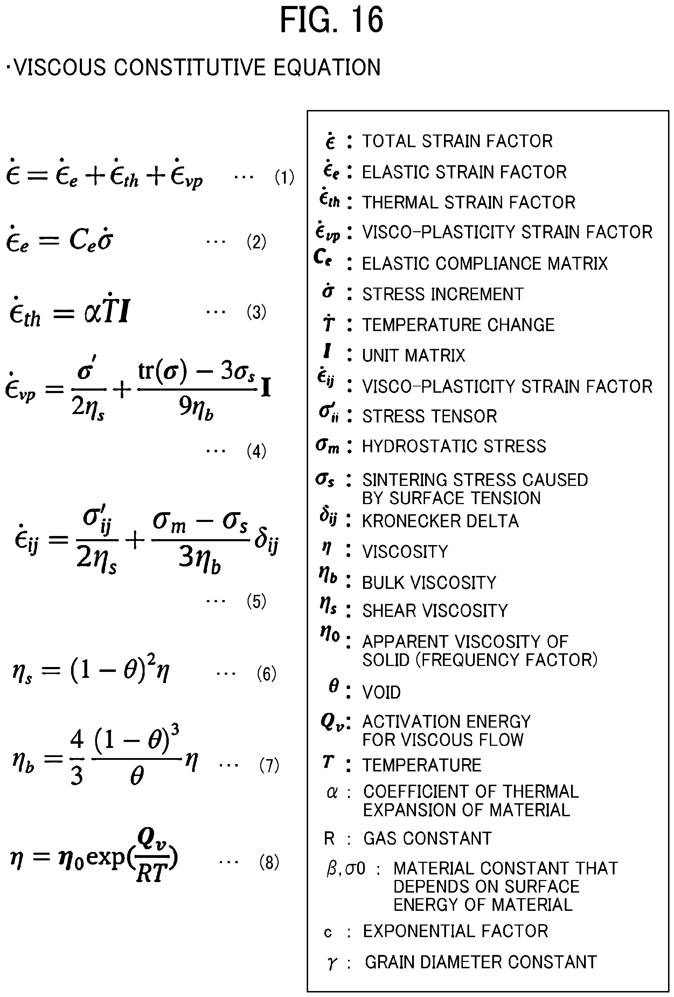

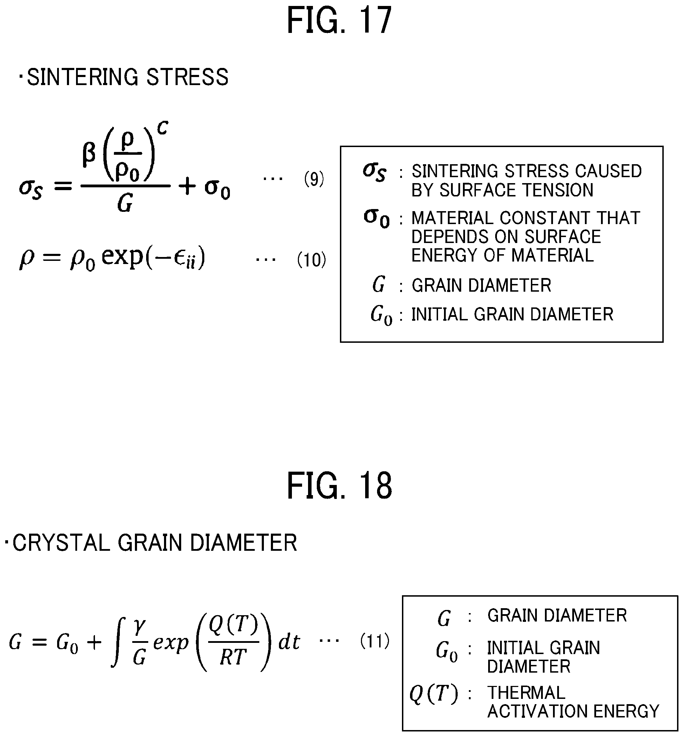

The following equations are used as governing equations and include equations used for static structural problems. The equations (1) to (8) illustrated in FIG. 16 all include viscous constitutive equations. The equation (9) illustrated in FIG. 17 expresses a sintering stress. The equation (11) illustrated in FIG. 18 expresses a grain diameter. In addition to the equations (1) to (11), equations relating to heat-transfer analysis and static structural analysis may also be subjected to multiphysics simulation. The multiphysics simulation refers to the analysis that takes into account the interactions of multiple phenomena, such as the structure and the heat transfer, or the fluid and the structure.

The viscosity used in a viscous constitutive equation is calculated from the Arrhenius equation indicated in the equation (8). Even when the physical property of metal powder indicating the liquid-phase sintering is substituted into the Arrhenius equation, the accuracy of the reproducibility is poor. In particular, the reproducibility of an excessive strain due to gravity, such as slumping which is observed in the liquid-phase sintering, is extremely poor.

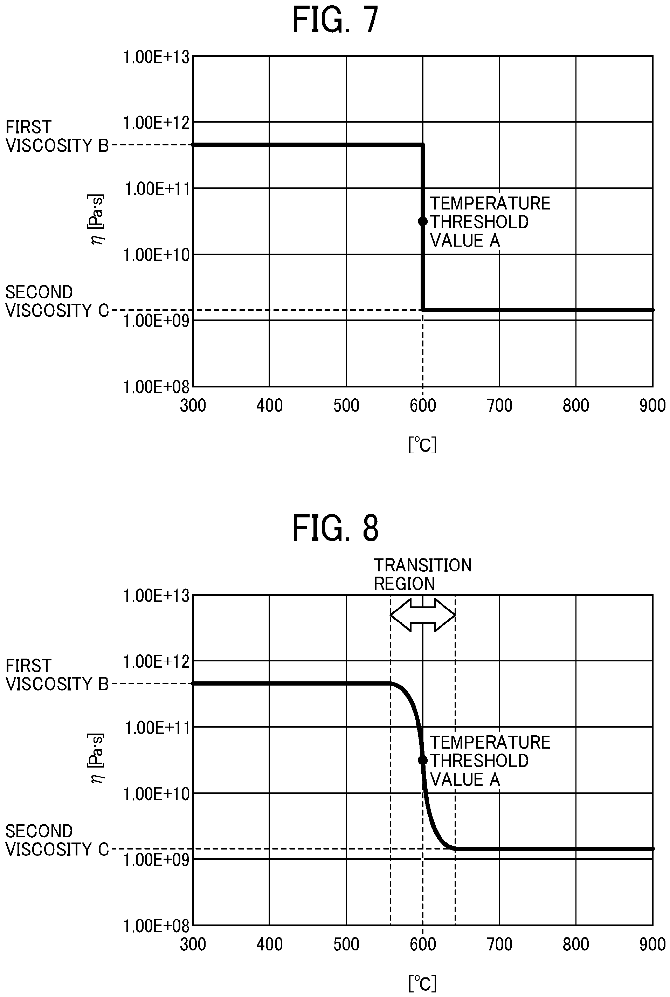

The viscosity obtained from the equation (8) is suitable for expressing a gradual change in viscosity seen during liquid-phase sintering, but is not suitable for expressing a sudden change in viscosity. Therefore, as illustrated in FIG. 7, a temperature/viscosity curve in which viscosity decreases at a predetermined temperature threshold value is used.

FIG. 7 is a graph illustrating an example of the temperature/viscosity curve. The horizontal axis represents the temperature [°C] while the vertical axis represents viscosity [Pa·s]. In the temperature/viscosity curve in FIG. 7, when the temperature during sintering or simulation has reached the predetermined temperature threshold value A, the viscosity decreases from the first viscosity to the second viscosity. In other words, when the temperature has exceeded the temperature threshold value A, the powder exhibits the liquid-phase sintering. In FIG. 7, the viscosity decreases by double digits or more at the temperature threshold value A. The amount of viscosity reduction, the temperature threshold value A, the first viscosity, and the second viscosity vary depending on, for example, the types of metal powder and a green compact. The temperatures and the viscosity illustrated in FIG. 7 are only examples.

In the FEM, the information processing apparatus 2 performs processing after receiving the temperature/viscosity curve illustrated in FIG. 7. However, there is a plurality of types of temperature/viscosity curves, and which temperature/viscosity curve is selected affects the accuracy. Therefore, the information processing apparatus 2 may combine the design of experiments and machine learning to find an optimal combination of parameter values.

The designer sets a range of parameter values to values that standard physical properties are not likely to have, and combines the design of experiments and machine learning. In the temperature/viscosity curve illustrated in FIG. 7, the designer sets the temperature threshold value A, the first viscosity, and the second viscosity as the parameter values. The first viscosity is higher than the second viscosity. In this way, the designer sets an appropriate temperature/viscosity curve by combining the temperature threshold value A, the first viscosity, and the second viscosity in the design of experiments.

The information processing apparatus 2 may learn the result using the temperature/viscosity curve through machine learning, thereby determining a combination of parameter values with high accuracy. This eliminates the need for the designer to set parameters. In addition, since the information processing apparatus 2 selects parameter values that are far from the viscosity derived using the equation (8) based on the physical properties (e.g., activation energy and frequency factors) of the material, the information processing apparatus 2 predicts the shape of the final compact with high accuracy.

For example, the first viscosity exhibits a constant value from 300°C to the temperature threshold value A, and the second viscosity exhibits a constant value at the temperature threshold value A or higher. The temperature/viscosity curve is preferably a step function that transitions from the first viscosity to the second viscosity when the temperature has reached the temperature threshold value A. This allows the information processing apparatus 2 to simulate a rapid temperature change.

A transition region where the viscosity transitions from the first viscosity to the second viscosity may be present at temperatures around the temperature threshold value A. The transition region refers to a range of temperatures that transition when the viscosity changes from the first viscosity to the second viscosity, instead of the viscosity decreasing at the single temperature threshold value A as in the case of a step function. FIG. 8 is a graph illustrating another example of the temperature/viscosity curve. FIG. 8 illustrates a curve in which the viscosity changes sigmoidally or exponentially within the transition region. Therefore, the transition region is preferably set within 100°C or 50°C above and below the temperature threshold value A. Further, the first viscosity and the second viscosity are preferably at least twice as different in viscosity.

The temperature/viscosity curve may change in three stages instead of two stages. This is because, in the case of mixed powder, a temperature at which a change from the solid phase to the liquid phase is exhibited varies depending on powder. Therefore, a plurality of temperature/viscosity curves, each of which is obtained by combining the temperature threshold value A, the first viscosity, and the second viscosity as one set, may be used.

### Information Processing Method

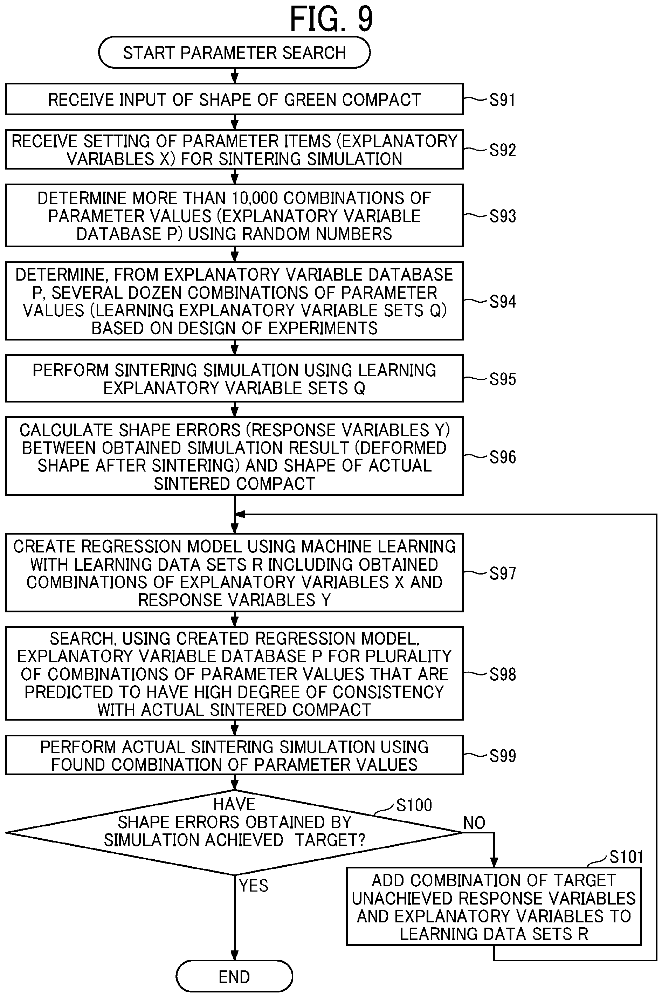

An example of the information processing method is described with reference to FIGS. 9 to 13. FIG. 9 is a flowchart illustrating an example of the processing performed by the information processing apparatus 2.

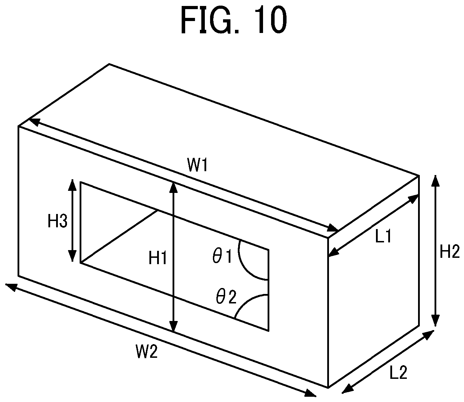

In step S91, the designer inputs the shape of a green compact (an example of a model fabrication object before sintering) for which sintering simulation is to be performed. In other words, the reception unit 37 receives the shape of the green compact for which sintering simulation is to be performed. The shape of the green compact is provided as three-dimensional data. In addition to the shape of the green compact, the reception unit 37 may receive the shape of an actual final compact (an example of the model fabrication object after actual sintering) and evaluation points of the shape. The shape of the actual final compact is obtained by scanning the shape of the actually fabricated and sintered final compact using, for example, a 3D scanner. The reception unit 37 may receive the shape of the actual final compact in a different step from step S91. In the present embodiment, as an example, the reception unit 37 receives a model fabrication object illustrated in FIG. 10 as the green compact.

In the present embodiment, 3D model data generated by a computer is used as the model fabrication object of the green compact. FIG. 10 is a view illustrating an example of the model fabrication object of the green compact. The model fabrication object is suitable for predicting the shape because slumping during the liquid-phase sintering is easy to observe. As illustrated in FIG. 10, for example, the designer sets the shape of the green compact for which nine evaluation points W1, W2, H1, H2, H3, L1, L2, θ1, and θ2 have been input. Although the designer sets the evaluation points in this example, the parameter value determination unit 31 may determine the evaluation points through image processing.

In step S92, the designer sets parameter items. The reception unit 37 receives the setting of the parameter items. The parameter items are values that affect deformation.
The designer sets the parameter items as explanatory variables X. The designer may set the setting items to be used in the FEM as the parameter items. For example, the designer may set at least the temperature threshold value A, the first viscosity, and the second viscosity as the parameter items to express a temperature/viscosity curve. The temperature threshold value A, the first viscosity, and the second viscosity correspond to prediction conditions for predicting the shape of the final compact. Further, the designer determines a range of values that each parameter value takes. In other words, the reception unit 37 receives the ranges of the temperature threshold value A, the first viscosity, and the second viscosity. The range of each value is referred to as a window. For example, a window indicates the upper and lower limits of the value. Depending on the parameter item, the parameter value may be a fixed value instead of having a window. For example, the reception unit 37 may further receive the input of a temperature transition region. The temperature transition region refers to a range of temperatures in which the viscosity of the green compact decreases from the first viscosity to the second viscosity due to sintering. The temperature threshold value A refers to a value included in the range of temperatures of the temperature transition region. The processing in step S92 may be performed at the same time as the processing in step S91 or may be performed before the processing in step S91.

In step S93, the parameter value determination unit 31 determines the parameter values using random numbers within the ranges of values set in step S92. The parameter value determination unit 31 combines the parameter values of the parameter items set as the explanatory variables X to create the explanatory variable database P. The parameter value determination unit 31 stores the explanatory variable database P in the third storage unit 41. For example, the parameter value determination unit 31 may generate 10,000 combinations of parameter values using random numbers to create the explanatory variable database P.

In step S94, the parameter value selection unit 32 selects several dozen combinations of parameter values. For example, the parameter value selection unit 32 selects several dozen combinations of parameter values from the explanatory variable database P based on the design of experiments. Examples of the design of experiments include the orthogonal array, the D-optimality, or a combination thereof. For example, the parameter value selection unit 32 selects, based on the D-optimality, several dozen combinations of parameter values from the explanatory variable database P as learning data sets for initial machine learning. The parameter value selection unit 32 selects, for example, 30 combinations of parameter values as the learning explanatory variable sets Q. The parameter value selection unit 32 stores the learning explanatory variable sets Q in the second storage unit 42.

In step S95, the shape prediction unit 33 performs sintering simulation using the learning explanatory variable sets Q selected in step S94 to predict the shape of the sintered green compact (an example of the model fabrication object after sintering), i.e., the shape of the final compact, from the shape of the green compact received in step S91. For example, when the number of learning explanatory variable sets Q selected in step S94 is 30, the shape prediction unit 33 predicts the shape of the final compact 30 times. Specifically, the shape prediction unit 33 extracts a set of the temperature threshold value A, the first viscosity, and the second viscosity from the learning explanatory variable sets Q to create a temperature/viscosity curve, and then predicts the shape of the final compact based on the created temperature/viscosity curve. The shape prediction unit 33 uses a different combination of the temperature threshold value A, the first viscosity, and the second viscosity each time the shape prediction unit 33 predicts the shape of the final compact. The designer may create a program for implementing the shape prediction unit 33. Alternatively, a product such as Hexagon's Simufact additive^{™} or ANSYS's ANSYS^{™} may be employed to implement the shape prediction unit 33.

In step S96, the shape error evaluation unit 34 calculates a first shape error between the shape of the final compact predicted in step S95 and the shape of the actual final compact for each evaluation point, and stores the first shape error in the second storage unit 42 in association with a corresponding one of the learning explanatory variable sets Q (first processing). The shape error evaluation unit 34 performs the first processing a predetermined number of times to obtain a plurality of correspondence data. The shape of the final compact predicted in step S95 is the predicted deformed shape of the model fabrication object after sintering. For example, the first shape error, which is the difference between the shape of the final compact predicted in step S95 and the actual measurement value of the shape of the actual final compact, is expressed by the percentage. The shape error between the predicted final compact and the actual final compact at each evaluation point is a response variable Y. In this case, the shape error evaluation unit 34 may automatically set the evaluation points of the predicted final green compact and the actual final green compact based on the evaluation points of the green compact set in step S91. Alternatively, the reception unit 37 may receive the input of the evaluation points for each of the predicted final green compact and the actual final green compact. The closer the response variable Y is to 0, the higher the accuracy.

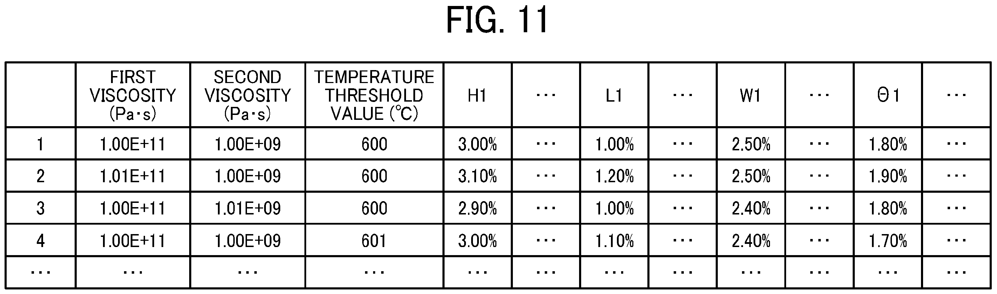

FIG. 11 illustrates an example of the correspondence data (the first viscosity, the second viscosity, the temperature threshold value, and the first shape error at each evaluation point) recorded by the shape error evaluation unit 34. A set of the first viscosity, the second viscosity, and the temperature threshold value is a learning explanatory variable set Q. The positions of the evaluation points indicated by H, L, W, and θ are illustrated in FIG. 10. Although four records (four rows) of the correspondence data are illustrated in FIG. 11, the number of records is 30 when the number of learning explanatory variable sets Q is 30. Although the first shape error is indicated as the error rate, the first shape error may be the value of the error. The explanatory variables X are the first viscosity, the second viscosity, and the temperature threshold value. The response variables Y are the first shape errors at the evaluation points indicated by H, L, W, and θ. In step S97, the regression model creation unit 35 creates a regression model through machine learning with learning data sets R including a plurality of combinations of explanatory variables X and response variables Y. Therefore, the learning data sets R are identical to the learning explanatory variable sets Q, which are stored in the second storage unit 42. The number of initial combinations of explanatory variables X and response variables Y is 30, the same number as the learning explanatory variable sets Q. When explanatory variables X and response variables Y are added in step S101, the number of learning data sets R exceeds 30. The algorithm used for machine learning may be, for example, a decision tree, a neural network, multiple linear regression analysis, multiple nonlinear regression analysis, support vector regression, Gaussian process regression, or Bayesian optimization.

In step S98, the search unit 36 searches, using the regression model created in step S97, the explanatory variable database P for a plurality of combinations of parameter values with which the output shape errors are close to or closest to 0. The parameter values to be the targets of the search in step S98 may be parameter values excluding the learning explanatory variable sets Q from the explanatory variable database P that have been used for learning. In other words, in step S98, different combinations of temperature threshold values, first viscosities, and second viscosities from the combinations used in step S95 may be set. For example, the search unit 36 may search for combinations of parameter values among 10,000 - 30 = 9,970 combinations of parameter values. Specifically, the search unit 36 repeatedly performs a process of inputting a combination of parameter values excluding the learning explanatory variable sets Q in the explanatory variable database P into the regression model and outputting the shape errors of the final compact. The search unit 36 searches for a plurality of combinations of parameter values with which the shape errors are close to or closest to 0 among the plurality of combinations of parameter values excluding the learning explanatory variable sets Q in the explanatory variable database P.

In step S99, the shape prediction unit 33 performs sintering simulation using each of the plurality of combinations of parameter values found in step S98 to predict the shape of the final compact. With each of the plurality of combinations of parameter values with which the shape errors are close to or closest to 0, the shape prediction unit 33 predicts the shape of the final compact with high accuracy. The shape error evaluation unit 34 calculates, for each evaluation point, a second shape error between the shape of the final compact predicted in step S99 and the shape of the actual final compact (second processing).

In step S100, the determination unit 39 determines, for each of the plurality of combinations of parameter values found in step S98, whether or not the corresponding second shape errors obtained in step S99 have achieved a target. When the determination unit 39 determines that the second shape errors have achieved the target, the search unit 36 determines the temperature threshold value, the first viscosity, and the second viscosity (corresponding to the prediction conditions) as an optimal combination of parameter values, and the processing in FIG. 9 ends. The search unit 36 stores the determined temperature threshold value, first viscosity, and second viscosity in the first storage unit 43. The output unit 38 may display the shape of the final compact obtained in step S99 or display the second shape errors in, for example, numerical form. In addition, the output unit 38 may display the combination of parameter values (corresponding to the prediction conditions) used by the shape prediction unit 33 when the determination unit 39 determines that the second shape errors have achieved the target. The combination of parameter values displayed herein may also be the optimal combination of parameter values in sintering simulation. The output unit 38 may transmit the prediction conditions to the sintering apparatus 400. The sintering apparatus 400 determines the sintering temperature based on the prediction conditions and controls the rate or time it takes for the temperature to rise to the temperature threshold value.

The term "achieving a target" herein means satisfying a predetermined condition. The designer may determine, as the target, a value of the matching rate between the shape output in step S99 and the shape of the actual final compact, or set an allowable range of the second shape errors as the target. Although the model fabrication object has been used in this example, the information processing apparatus 2 may predict the shape of the final compact to be actually fabricated.

When the determination unit 39 determines, in step S100, that the second shape errors obtained in step S99 have not achieved the target, the designer adds the corresponding combination of the explanatory variables X, which are a combination of parameter values found in step S98 with which the shape errors are close to or closest to 0, and the response variables Y, which are the second shape errors between the shape of the final compact output in step S99 and the shape of the actual final compact, to the learning data sets R in step S101. That is, the designer adds the combination of the explanatory variables X and the response variables Y as correspondence data to the learning explanatory variable sets Q stored in the second storage unit 42. The regression model creation unit 35 creates a regression model through machine learning. The processing returns to step S97 and repeats steps S97 to S100 until the second shape errors achieve the target in step S100.

Although the information processing apparatus 2 predicts the shape of the final compact through sintering simulation in FIG. 9, the information processing apparatus 2 may predict the amount of deformation from the model fabrication object. For example, the information processing apparatus 2 may predict how much each evaluation point of the model fabrication object subjected to the sintering simulation in FIG. 10 deforms due to sintering.

### Machine Learning

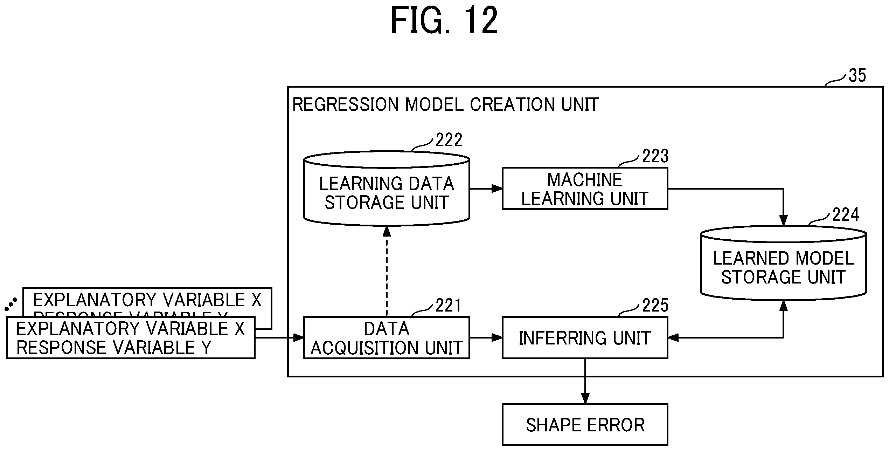

FIG. 12 is a block diagram illustrating example functions of the regression model creation unit 35. The regression model creation unit 35 includes a data acquisition unit 221, a learning data storage unit 222, a machine learning unit 223, a learned model storage unit 224, and an inferring unit 225. The details of each unit are described below.

### Learning Phase

The data acquisition unit 221 acquires explanatory variables X and response variables Y as learning data and stores the explanatory variables X and the response variables Y in the learning data storage unit 222. The learning data storage unit 222 stores a plurality of learning data sets. For example, the learning data storage unit 222 stores 30 learning data sets R.

The machine learning unit 223 obtains learning data sets from the learning data storage unit 222 one by one and generates a learned model as a regression model. Specifically, the machine learning unit 223 performs machine learning using explanatory variables X included in the learning data sets as input data and response variables Y associated with the explanatory variables X as teaching data to generate a learned model. The machine learning unit 223 stores the generated learned model in the learned model storage unit 224. The learned model storage unit 224 stores the learned model generated by the machine learning unit 223.

### Inferring Phase

The data acquisition unit 221 obtains a plurality of combinations of parameter values as the explanatory variables X and provides the explanatory variables X to the inferring unit 225. The inferring unit 225 infers shape errors from the parameter values. Specifically, the inferring unit 225 inputs parameter values into the learned model stored in the learned model storage unit 224 to output shape errors.

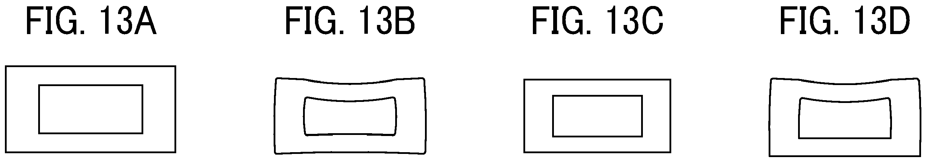

FIGS. 13A to 13D are cross-sectional views of example results of sintering simulation. In FIGS. 13A to 13D, an AlSi alloy (aluminum-silicon alloy) is used as powder, and a model of a green compact illustrated in FIG. 13A is sintered. A final compact illustrated in FIG. 13B is the result of sintering the green compact illustrated in FIG. 13A using a metal binder jetting apparatus. Therefore, it is desirable that the shape similar to the shape illustrated in FIG. 13B be reproduced as the result of performing sintering simulation on the shape data illustrated in FIG. 13A. As a comparison example, FIG. 13C illustrates the shape obtained as the result of the sintering simulation when the parameter values are optimized through sensitivity analysis using the equation (8) instead of using a temperature/viscosity curve. FIG. 13D illustrates an example of the shape obtained as the result of the sintering simulation when the parameter values are optimized using the design of experiments and machine learning with the temperature/viscosity curve. The shapes illustrated in FIGS. 13C and 13D are both three-dimensional data.

The shape illustrated in FIG. 13C reproduces the shrinkage of the external shape to some extent, but does not reproduce slumping. As a result, the shape error between the shape illustrated in FIG. 13C and the shape of the actual final compact illustrated in FIG. 13B is large. By contrast, the shape optimized using the design of experiments and machine learning with the temperature/viscosity curve in FIG. 13D reproduces slumping well, and the shape error between the shape illustrated in FIG. 13D and the shape of the actual final compact illustrated in FIG. 13B is small. Thus, the information processing apparatus 2 predicts the shape well through the sintering simulation.

Therefore, the information processing apparatus 2 optimizes the parameter values using the design of experiments and machine learning with the temperature/viscosity curve, thereby predicting the shape of the final compact with high accuracy.

### Simulation After Calculating Temperature/Viscosity Curve

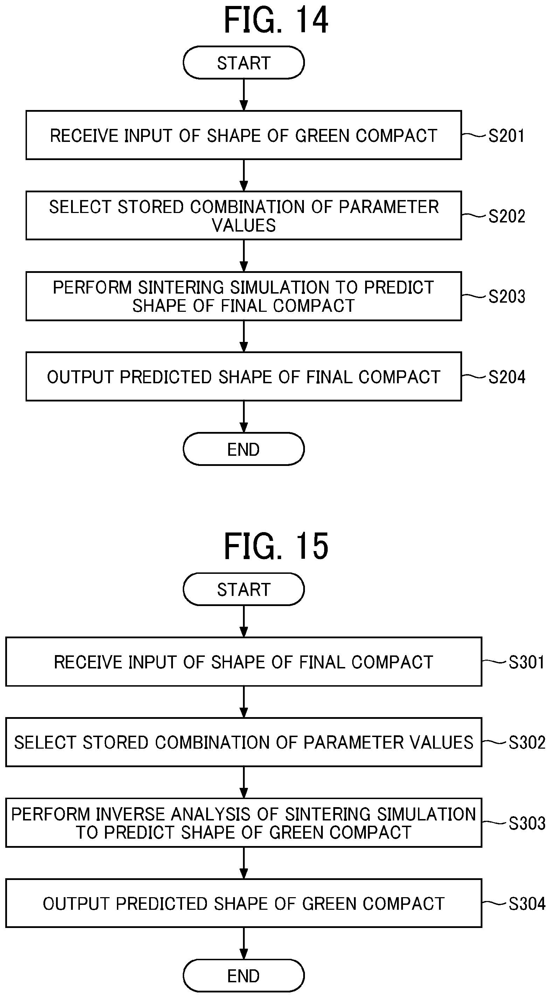

FIG. 14 is a flowchart illustrating an example of a flow of simulation using prediction conditions (the temperature threshold value, the first viscosity, and the second viscosity) determined in the processing illustrated in FIG. 9.

In step S201, the reception unit 37 receives the input of the shape of a green compact (an example of a fabrication object before sintering).

In step S202, the shape prediction unit 33 selects, from the first storage unit 43, prediction conditions (the temperature threshold value, the first viscosity, and the second viscosity) determined in the processing illustrated in FIG. 9. The term "select" herein means, for example, that when the first storage unit 43 stores parameters for different pieces of powder composition information (e.g., a temperature/viscosity curve for aluminum, a temperature/viscosity curve for titanium), the shape prediction unit 33 selects parameters corresponding to the composition of the input green compact.

In step S203, the shape prediction unit 33 predicts the shape of the sintered green compact, that is, the shape of the final compact, based on the selected combination of parameters.

In step S204, the output unit 38 outputs the shape of the final compact predicted in step S203.

### Inverse-Analysis Simulation After Calculating Temperature/Viscosity Curve

FIG. 15 is a flowchart illustrating an example of a flow of simulation in which inverse analysis is performed using optimal parameters (the temperature threshold value, the first viscosity, and the second viscosity) determined in the processing illustrated in FIG. 9. In FIG. 15, the information processing apparatus 2 predicts, based on the shape of the final compact, the shape of the green compact using the temperature/viscosity curve obtained in FIG. 9. The inverse analysis refers to switching the input and the output in simulation.

In step S301, the reception unit 37 receives the input of the shape of the final compact (an example of the fabrication object after sintering).

In step S302, the shape prediction unit 33 selects, from the first storage unit 43, optimal parameters (the temperature threshold value, the first viscosity, and the second viscosity) determined in the processing illustrated in FIG. 9. The term "select" herein means, for example, that when the first storage unit 43 stores parameters for different pieces of powder composition information (e.g., a temperature/viscosity curve for aluminum, a temperature/viscosity curve for titanium), the shape prediction unit 33 selects parameters corresponding to the composition of the input green compact.

In step S303, the shape prediction unit 33 performs inverse analysis to predict the shape of the green compact that becomes, after sintering, the shape of the final compact received in step S301. In the inverse analysis, the shape prediction unit 33 iteratively modifies the predicted shape of the green compact so as to converge to the shape of the target final compact. Specifically, the shape prediction unit 33 initially sets a shape of the green compact based on the shape of the final compact that has been input. The shape prediction unit 33 performs sintering simulation on the initially set green compact to obtain a predicted shape of the final compact. The shape prediction unit 33 quantifies, using a "cost function," the difference between the predicted shape of the final compact obtained through the sintering simulation and the input shape of the final compact. The shape prediction unit 33 modifies the shape of the green compact that has been initially set so as to minimize the output (difference) of the cost function. The shape prediction unit 33 repeats this processing until the difference becomes a threshold value or less.

As another method of the inverse analysis, the shape prediction unit 33 may create a model using, for example, a neural network, to inversely predict the shape of the green compact from the shape of the final compact using a large amount of simulation data.

In step S304, the output unit 38 outputs the shape of the green compact predicted in step S303.

The present disclosure is not limited to the embodiments described in detail above, and various modifications and substitutions may be made without departing from the scope of the claims.

For example, in the embodiments described above, the information processing apparatus 2 performs the sintering simulation. In another embodiment, the cloud server 3 may perform the sintering simulation. In this case, the designer connects the information processing apparatus 2 to the cloud server 3 to execute a web application, for example. The designer performs settings relating to the sintering simulation on the web application to cause the cloud server 3 to perform the sintering simulation according to the settings.

In the embodiments described above, the number of parameter items is two or more. In another embodiment, the number of parameter items may be one.

The information processing apparatus 2 may perform inverse analysis using a combination of parameter values. For example, the information processing apparatus 2 may receive the shape of a final compact desired to be fabricated and predict an optimal shape of a green compact to obtain the final compact desired to be fabricated.

In the embodiments described above, a fabrication object to be subjected to the sintering simulation is fabricated through the MBJ. In another embodiment, a fabrication object to be subjected to the sintering simulation may be fabricated through high-speed sintering (HSS).

In the embodiments described above, a fabrication object includes powder including pure aluminum or an aluminum alloy. In another embodiment, a fabrication object may include another metal powder. A fabrication object may include any powder other than metal powder as long as the powder becomes a liquid phase during sintering.

In the embodiments described above, a model fabrication object is subjected to the sintering simulation. In another embodiment, a model placed on a ceramic setter or a green compact setter may be subjected to the sintering simulation.

The blocks in the example configurations illustrated in the drawings such as FIG. 6 are divided in accordance with main functions of the information processing apparatus 2 to facilitate the understanding of the processing of the information processing apparatus 2. No limitation is intended by how the process units are divided or by the names of the process units. A process performed by the information processing apparatus 2 may be divided into a larger number of process units depending on the processing to be performed. Further, one process unit may be divided further so as to include more processes.

Each of the functions of the above-described embodiments can be implemented by one or more processing circuits or circuitry. As used herein, the term "processing circuit or circuitry" includes processors programmed to implement each function by software, such as a processor implemented by an electronic circuit, and devices designed to implement the functions described above, such as an application-specific integrated circuit (ASIC), a digital signal processor (DSP), a field programmable gate array (FPGA), and existing circuit modules.

A digital twin, which links the real world and a virtual space, is a technology that reproduces, in the virtual space, an object existing in the real world and simulates the behavior of the object to predict or optimize the behavior of the object in the real world. Simulation, which is the heart of the digital twin, is an important tool for conducting various experiments and analyses in the virtual space based on data of the real world. Simulation data quantifies and models complex phenomena in the real world, thereby bringing benefits such as improved prediction accuracy, optimization, risk reduction, and cost reduction. The digital twin is expected to be increasingly sophisticated through collaboration with technology such as artificial intelligence (AI) or Internet of Things (IoT). For example, machine learning may be employed to improve the accuracy of a simulation model, or edge computing may be employed to achieve real-time simulation.

As an example, simulation data according to the above-described embodiments may be applied to the digital twin as follows.

### 1. Preprocessing of Simulation Data

"Data cleaning" is performed to process noise and missing values included in the collected simulation data and improve the quality of the data. After that, "data conversion" is performed to convert the simulation data subjected to "data cleaning" into a format processable by a simulation model.

### 2. Creation of Simulation Model

"Creation of a physical model" is performed to create a physical model in which physical characteristics of an object to be simulated are described. Then, "creation of a mathematical model" is performed to express the created physical model in a mathematical equation. After that, "numerical analysis" is performed to develop an algorithm for numerically solving the created mathematical model.

### 3. Integration into Digital Twin

"Visualization of a simulation result" is performed to display the simulation result in a visually easy-to-understand format, such as a 3D model or a graph. "Accuracy verification of the model" is performed to compare the visualized simulation result with data such as real-world measurement data or sensor data and verify the accuracy of the model. The accuracy of the verified model is improved by adjusting a control parameter of the real world based on the simulation result.

Applying the simulation data in the above-described embodiments to the digital twin enables simulation of fabrication objects including different materials with a 3D printer.
This also enables simulation of the fabrication of a three-dimensional object with various materials layered therein, such as food, cosmetics, an electronic circuit, or paint, by applying the principle of the 3D printer.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The example aspects of the present disclosure are as follows.

According to a first aspect, an information processing method performed by an information processing apparatus includes: receiving (S301) a shape of a fabrication object after sintering; predicting (S303) a shape of the fabrication object before the sintering based on the shape of the fabrication object after the sintering and a prediction condition stored in a storage unit; and outputting (S304) information relating to the predicted shape of the fabrication object before the sintering. The prediction condition includes information based on: a temperature threshold value that is a temperature at which a viscosity of the fabrication object decreases from a first viscosity to a second viscosity due to the sintering; the first viscosity; and the second viscosity.

According to a second aspect, an information processing method performed by an information processing apparatus includes: receiving (S201) a shape of a fabrication object before sintering; predicting (S203) a shape of the fabrication object after the sintering based on the shape of the fabrication object before the sintering and a prediction condition stored in a storage unit; and outputting (S204) information relating to the predicted shape of the fabrication object after the sintering. The prediction condition includes information based on: a temperature threshold value that is a temperature at which a viscosity of the fabrication object decreases from a first viscosity to a second viscosity due to the sintering; the first viscosity; and the second viscosity.

According to a third aspect, the information processing method according to the first or second aspect, further includes: receiving (S91) a shape of a model fabrication object before sintering and a shape of the model fabrication object after actual sintering; receiving (S92) ranges of the temperature threshold value, the first viscosity, and the second viscosity; and performing (S96) first processing a predetermined number of times to record a plurality of correspondence data. The first processing includes: predicting a shape of the model fabrication object after the sintering based on the temperature threshold value, the first viscosity, and the second viscosity that have been set within the respective ranges; calculating a first shape error between the predicted shape of the model fabrication object after the sintering and the shape of the model fabrication object after the actual sintering; and storing the correspondence data in which the temperature threshold value, the first viscosity, and the second viscosity that have been set within the respective ranges are associated with the calculated first shape error. The prediction condition is determined based on the plurality of the correspondence data.

According to a fourth aspect, the information processing method according to the third aspect further includes setting (S94) a different combination of the temperature threshold value, the first viscosity, and the second viscosity for each first processing.

According to a fifth aspect, the information processing method according to the third or fourth aspect, further includes performing (S99) second processing after performing (S96) the first processing the predetermined number of times. The second processing includes: predicting, using the plurality of the correspondence data, the shape of the model fabrication object after the sintering; and calculating a second shape error between the predicted shape of the model fabrication object after the sintering and the shape of the model fabrication object after the actual sintering. The prediction condition is determined based on the second shape error calculated in the second processing.

According to a sixth aspect, in the information processing method according to the fifth aspect, the second processing further includes: setting a combination of the temperature threshold value, the first viscosity, and the second viscosity falling within the respective ranges such that the combination is different from a combination of the temperature threshold value, the first viscosity, and the second viscosity that have been set for the first processing; and predicting the shape of the model fabrication object after the sintering based on the plurality of the correspondence data and the combination of the temperature threshold value, the first viscosity, and the second viscosity that fall within the respective ranges and that have been set for the second processing.

According to a seventh aspect, the information processing method according to the fifth or sixth aspect, further includes: determining (S100) the prediction condition when the second shape error satisfies a predetermined condition; and performing (S99) the second processing again when the second shape error does not satisfy the predetermined condition.

According to an eighth aspect, the information processing method according to the seventh aspect further includes, when the second shape error does not satisfy the predetermined condition, storing (S101) additional correspondence data in which the temperature threshold value, the first viscosity, and the second viscosity that fall within the respective ranges and that have been set in the second processing are associated with the calculated second shape error.

According to a ninth aspect, the information processing method according to any one of the third to eighth aspects further includes receiving (S92) a range of a temperature transition region. The temperature transition region is a range of temperatures in which a viscosity of the model fabrication object decreases from the first viscosity to the second viscosity due to the sintering. The temperature threshold value is a value within the range of the temperature transition region.

According to a tenth aspect, the information processing method according to any one of the third to ninth aspects, further includes receiving (S91) an evaluation point that is a position at which the first shape error of the model fabrication object is calculated. The first shape error is an error at the evaluation point between the predicted shape of the model fabrication object after the sintering and the shape of the model fabrication object after the actual sintering.

According to an eleventh aspect, the information processing method according to any one of the first to tenth aspects further includes receiving (S201, S301) composition information of the fabrication object.

According to a twelfth aspect, the information processing method according to any one of the first to eleventh aspects, the fabrication object includes aluminum.

According to a thirteenth aspect, an information processing method includes: receiving (S91) a shape of a model fabrication object before sintering and a shape of the model fabrication object after actual sintering; receiving (S92) ranges of a temperature threshold value, a first viscosity, and a second viscosity, the temperature threshold value being a temperature at which a viscosity of the model fabrication object decreases from the first viscosity to the second viscosity due to the sintering; performing (S96) first processing a predetermined number of times to record a plurality of correspondence data. The first processing includes: predicting a shape of the model fabrication object after the sintering based on the temperature threshold value, the first viscosity, and the second viscosity that have been set within the respective ranges; calculating a first shape error between the predicted shape of the model fabrication object after the sintering and the shape of the model fabrication object after the actual sintering; and storing correspondence data in which the temperature threshold value, the first viscosity, and the second viscosity that have been set within the respective ranges are associated with the calculated first shape error; determining a prediction condition based on the plurality of the correspondence data; and outputting the determined prediction condition. The prediction condition includes information based on the temperature threshold value, the first viscosity, and the second viscosity.

According to a fourteenth aspect, an information processing apparatus (2) includes: a reception unit (37) configured to receive a shape of a fabrication object after sintering; a prediction unit (33) configured to predict a shape of the fabrication object before the sintering based on the shape of the fabrication object after the sintering and a prediction condition stored in a storage unit; and an output unit (38) configured to output information relating to the predicted shape of the fabrication object before the sintering. The prediction condition includes information based on: a temperature threshold value that is a temperature at which a viscosity of the fabrication object decreases from a first viscosity to a second viscosity due to the sintering; the first viscosity; and the second viscosity.

According to a fifteenth aspect, a program causes an information processing apparatus to receive a shape of a fabrication object after sintering; predict a shape of the fabrication object before the sintering based on the shape of the fabrication object after the sintering and a prediction condition stored in a storage unit; and output information relating to the predicted shape of the fabrication object before the sintering. The prediction condition includes information based on: a temperature threshold value that is a temperature at which a viscosity of the fabrication object decreases from a first viscosity to a second viscosity due to the sintering; the first viscosity; and the second viscosity.

## Claims

1. An information processing method performed by an information processing apparatus, the information processing method comprising:
receiving (S301) a shape of a fabrication object after sintering;
predicting (S303) a shape of the fabrication object before the sintering based on the shape of the fabrication object after the sintering and a prediction condition stored in a storage unit; and
outputting (S304) information relating to the predicted shape of the fabrication object before the sintering, the prediction condition including information based on:
a temperature threshold value that is a temperature at which a viscosity of the fabrication object decreases from a first viscosity to a second viscosity due to the sintering;
the first viscosity; and
the second viscosity.

2. An information processing method performed by an information processing apparatus, the information processing method comprising:
receiving (S201) a shape of a fabrication object before sintering;
predicting (S203) a shape of the fabrication object after the sintering based on the shape of the fabrication object before the sintering and a prediction condition stored in a storage unit; and
outputting (S204) information relating to the predicted shape of the fabrication object after the sintering, the prediction condition including information based on:
a temperature threshold value that is a temperature at which a viscosity of the fabrication object decreases from a first viscosity to a second viscosity due to the sintering;
the first viscosity; and
the second viscosity.

3. The information processing method according to claim 1 or 2, further comprising:
receiving (S91) a shape of a model fabrication object before sintering and a shape of the model fabrication object after actual sintering;
receiving (S92) ranges of the temperature threshold value, the first viscosity, and the second viscosity; and
performing (S96) first processing a predetermined number of times to record a plurality of correspondence data,
wherein the first processing includes:
predicting a shape of the model fabrication object after the sintering based on the temperature threshold value, the first viscosity, and the second viscosity that have been set within the respective ranges;
calculating a first shape error between the predicted shape of the model fabrication object after the sintering and the shape of the model fabrication object after the actual sintering; and
storing the correspondence data in which the temperature threshold value, the first viscosity, and the second viscosity that have been set within the respective ranges are associated with the calculated first shape error, and
the prediction condition is determined based on the plurality of the correspondence data.

4. The information processing method according to claim 3, further comprising setting (S94) a different combination of the temperature threshold value, the first viscosity, and the second viscosity for each first processing.

5. The information processing method according to claim 3 or 4, further comprising performing (S99) second processing after performing (S96) the first processing the predetermined number of times,
wherein the second processing includes:
predicting, using the plurality of the correspondence data, the shape of the model fabrication object after the sintering; and
calculating a second shape error between the predicted shape of the model fabrication object after the sintering and the shape of the model fabrication object after the actual sintering, and
the prediction condition is determined based on the second shape error calculated in the second processing.

6. The information processing method according to claim 5, wherein the second processing further includes:
setting a combination of the temperature threshold value, the first viscosity, and the second viscosity falling within the respective ranges such that the combination is different from a combination of the temperature threshold value, the first viscosity, and the second viscosity that have been set for the first processing; and
predicting the shape of the model fabrication object after the sintering based on the plurality of the correspondence data and the combination of the temperature threshold value, the first viscosity, and the second viscosity that fall within the respective ranges and that have been set for the second processing.

7. The information processing method according to claim 6, further comprising:
determining (S100) the prediction condition when the second shape error satisfies a predetermined condition; and
performing (S99) the second processing again when the second shape error does not satisfy the predetermined condition.

8. The information processing method according to claim 7, further comprising, when the second shape error does not satisfy the predetermined condition, storing (S101) additional correspondence data in which the temperature threshold value, the first viscosity, and the second viscosity that fall within the respective ranges and that have been set in the second processing are associated with the calculated second shape error.

9. The information processing method according to any one of claims 3 to 8, further comprising receiving (S92) a range of a temperature transition region,
wherein the temperature transition region is a range of temperatures in which a viscosity of the model fabrication object decreases from the first viscosity to the second viscosity due to the sintering, and
the temperature threshold value is a value within the range of the temperature transition region.

10. The information processing method according to any one of claims 3 to 9, further comprising receiving (S91) an evaluation point that is a position at which the first shape error of the model fabrication object is calculated,
wherein the first shape error is an error at the evaluation point between the predicted shape of the model fabrication object after the sintering and the shape of the model fabrication object after the actual sintering.

11. The information processing method according to any one of claims 1 to 10, further comprising receiving (S201, S301) composition information of the fabrication object.

12. The information processing method according to any one of claims 1 to 11, wherein the fabrication object includes aluminum.

13. Carrier means for carrying computer readable code for controlling a computer system to carry out the method of any one of claims 1 to 12.

14. An information processing apparatus (2) comprising:
a reception unit (37) configured to receive a shape of a fabrication object after sintering;
a prediction unit (33) configured to predict a shape of the fabrication object before the sintering based on the shape of the fabrication object after the sintering and a prediction condition stored in a storage unit; and
an output unit (38) configured to output information relating to the predicted shape of the fabrication object before the sintering, the prediction condition including information based on:
a temperature threshold value that is a temperature at which a viscosity of the fabrication object decreases from a first viscosity to a second viscosity due to the sintering;
the first viscosity; and
the second viscosity.
